Europäisches Patentamt

European Patent Office

Office européen des brevets

(11) Veröffentlichungsnummer: **0 289 827 B1**

(12) **EUROPÄISCHE PATENTSCHRIFT**

(19)

(45) Veröffentlichungstag der Patentschrift: **24.06.92**

(21) Anmeldenummer: **88105963.8**

(22) Anmeldetag: **14.04.88**

(51) Int. Cl.5: **C08F 220/04**, A01C 1/06, A01N 25/26, //(C08F220/04, 246:00)

(54) **Wasserlösliche Copolymerisate, Verfahren zu ihrer Herstellung und ihre Verwendung.**

(30) Priorität: **21.04.87 DE 3713348**

(43) Veröffentlichungstag der Anmeldung:
**09.11.88 Patentblatt 88/45**

(45) Bekanntmachung des Hinweises auf die Patenterteilung:
**24.06.92 Patentblatt 92/26**

(84) Benannte Vertragsstaaten:
**AT BE CH DE ES FR GB IT LI NL SE**

(56) Entgegenhaltungen:
**EP-A- 0 005 363**
**EP-A- 0 114 478**
**FR-A- 2 595 706**

(73) Patentinhaber: **BASF Aktiengesellschaft**
**Carl-Bosch-Strasse 38**
**W-6700 Ludwigshafen(DE)**

(72) Erfinder: **Seelmann-Eggebert, Hans-Peter, Dr.**
**Friedrichstrasse 8**
**W-6905 Schriesheim(DE)**
Erfinder: **Boeckh, Dieter, Dr.**
**Trifelsring 63**
**W-6703 Limburgerhof(DE)**
Erfinder: **Hartmann, Heinrich, Dr.**
**Weinheimer Strasse 46**
**W-6703 Limburgerhof(DE)**
Erfinder: **Trieselt, Wolfgang, Dr.**
**Alwin-Mittasch-Platz 1**
**W-6700 Ludwigshafen(DE)**
Erfinder: **Kud, Alexander, Dr.**
**Am Hellbrunn 57**
**W-6509 Eppelsheim(DE)**

EP 0 289 827 B1

Rank Xerox (UK) Business Services

**Beschreibung**

Aus der WO-Anmeldung 85/01736 ist bekannt, Saatgut mit einer Polymerisatmischung zu beschichten, die hygroskopisch ist. Die Mischung besteht aus feinteiligen vernetzten Polyacrylamiden und feinteiligen vernetzten Polyacrylaten. Diese Mischungen können gegebenenfalls noch Graphit enthalten. Das damit beschichtete Saatgut keimt schneller als unbehandeltes. Nachteilig ist jedoch, daß die hochmolekularen, vernetzten Polymerisate biologisch praktisch nicht abbaubar sind.

Der vorliegenden Erfindung liegt die Aufgabe zugrunde, weitgehend biologisch abbaubare Beschichtungsmittel für Saatgut zur Verfügung zu stellen.

Die Aufgabe wird erfindungsgemäß gelöst mit wasserlöslichen Copolymerisaten auf Basis von monoethylenisch ungesättigten Carbonsäuren mit 3 bis 6 C-Atomen, wenn die Copolymerisate einen K-Wert von 15 bis 120 (bestimmt nach H. Fikentscher am Natriumsalz in wäßriger Lösung bei 25°C, einem pH-Wert von 7 und einer Polymerkonzentration des Na-Salzes von 1 Gew.%) haben und

a) 99,5 bis 80 Mol% wenigstens einer monoethylenisch ungesättigten $C_3$- bis $C_6$-Monocarbonsäure und

b) 0,5 bis 20 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

(b1) monoethylenisch ungesättigten $C_3$- bis $C_6$-Monocarbonsäuren mit

(b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen und gegebenenfalls

c) anderen, mit a) und b) copolymerisierbaren, wasserlöslichen, monoethylenisch ungesättigten Monomeren

mit der Maßgabe einpolymerisiert enthalten, daß die Summe der Angaben in Mol.% a) bis c) immer 100 beträgt und daß die über Einheiten von b) miteinander verknüpften Polymersegmente aus Einheiten der Monomeren a) und c) ein Molekulargewicht (Gewichtsmittel) von höchstens 15 000 haben.

Die wasserlöslichen Copolymerisate werden hergestellt durch Copolymerisieren von Monomerengemischen aus

a) 99,5 bis 80 Mol% wenigstens einer monoethylenisch ungesättigten $C_3$- bis $C_6$-Monocarbonsäure und

b) 0,5 bis 20 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

(b1) monoethylenisch ungesättigten $C_3$- bis $C_6$-Monocarbonsäuren mit

(b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen und gegebenenfalls

c) anderen, mit a) und b) copolymerisierbaren, wasserlöslichen, monoethylenisch ungesättigten Monomeren

in wäßriger Lösung in Gegenwart von Polymerisationsinitiatoren und gegebenenfalls Reglern, wobei die Summe der Angaben in Mol% a) bis c) immer 100 beträgt.

Als Komponente a) der wasserlöslichen Copolymerisate kommen monoethylenisch ungesättigte $C_3$- bis $C_6$-Monocarbonsäuren in Betracht. Geeignete Carbonsäuren dieser Art sind beispielsweise Acrylsäure, Methacrylsäure, Ethacrylsäure, Vinylessigsäure, Allylessigsäure und Crotonsäure. Vorzugsweise verwendet man als Monomer der Komponente a) Acrylsäure und/oder Methacrylsäure. Die Monomeren der Komponente a) sind zu 99,5 bis 80, vorzugsweise 97 bis 83 Mol% am Aufbau des Copolymerisats beteiligt.

Wesentlicher Bestandteil der Copolymerisate sind die Monomeren der Komponente b). Hierbei handelt es sich um Comonomere, die mindestens zwei ethylenisch ungesättigte, nicht konjugierte Doppelbindungen und mindestens eine Ester-Gruppe aufweisen. Diese Comonomeren bewirken im allgemeinen eine Erhöhung des Molekulargewichts der Copolymerisate und sind zu 0,5 bis 20, vorzugsweise 3 bis 17 Mol% am Aufbau der Copolymerisate beteiligt.

Die Comonomeren b) sind z.B. erhältlich durch Umsetzung von

b1) monoethylenisch ungesättigten $C_3$- bis $C_6$-Monocarbonsäuren oder deren Gemischen mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines

EP 0 289 827 B1

Molekulargewichts über etwa 400 bis 10.000, Polyglycerinen eines Molekulargewichts bis 2.000, Polyvinylalkohol eines Molekulargewichts bis 10.000, einwertigen, monoethylenisch ungesättigten $C_3$- bis $C_6$-Alkoholen oder deren Mischungen.

Statt der freien Säuren kann man als Komponenten b1) auch deren esterbildende Derivate, wie Anhydride, Säurehalogenide oder Säureester, insbesondere solche mit niederen einfachen Alkoholen, einsetzen.

Mehrwertige, 2 bis 6 C-Atome aufweisende Alkohole sind beispielsweise Glykol, Glycerin, Pentaerythrit und Monosaccharide, wie Glucose, Mannose, Galactose, Uronsäuren, wie Galacturonsäure, und Zuckersäuren, wie Schleimsäure oder Galactonsäure.

Unter wasserlöslichen Polyalkylenglykolen sollen die Anlagerungsprodukte von Ethylenoxid, Propylenoxid, n-Butylenoxid und Isobutylenoxid oder deren Gemischen an mehrwertige, 2 bis 6 Kohlenstoffatome aufweisende Alkohole verstanden werden, z.B. die Anlagerungsprodukte von Ethylenoxid an Glykol, Anlagerungsprodukte von Ethylenoxid an Glycerin, Anlagerungsprodukte von Ethylenoxid an Pentaerythrit, Anlagerungsprodukte von Ethylenoxid an Monosaccharide, sowie die Anlagerungsprodukte von Mischungen der genannten Alkylenoxide an mehrwertige Alkohole. Bei diesen Anlagerungsprodukten kann es sich um Blockcopolymerisate von Ethylenoxid und Propylenoxid, von Ethylenoxid und Butylenoxiden oder von Ethylenoxid, Propylenoxid und Butylenoxiden handeln. Außer den Blockcopolymerisaten kommen solche Anlagerungsprodukte in Betracht, die die genannten Alkylenoxide in statistischer Verteilung einpolymerisiert enthalten. Das Molekulargewicht der Polyalkylenglykole beträgt zweckmäßigerweise bis zu 5.000, vorzugsweise bis 2.000. Von den wasserlöslichen Polyalkylenglykolen verwendet man vorzugsweise Diethylenglykol, Triethylenglykol, Tetraethylenglykol und Polyethylenglykol eines Molekulargewichts von bis zu 1.500.

Als Komponente b2) kommen außerdem Polyglycerine eines Molekulargewichts bis 2.000 in Betracht. Vorzugsweise verwendet man von dieser Stoffklasse Diglycerin, Triglycerin und Tetraglycerin. Außerdem kommen Polyvinylalkohole eines Molekulargewichts bis 10.000, vorzugsweise Polyvinylalkohole mit einem Molekulargewicht bis zu 2.000 in Betracht. Geeignete Polyvinylalkohole, die durch Hydrolyse aus Polyvinylacetat hergestellt werden, können dabei durch vollständige oder teilweise Hydrolyse von Polyvinylacetat erhalten werden.

Vorzugsweise werden Comonomere b) aus Acrylsäure, Methacrylsäure bzw. Methacrylsäureanhydrid und Ethylenglykol, Polyethylenglykol eines Molekulargewichts bis 2.000, Glycerin, Diglycerin, Triglycerin, Tetraglycerin, sowie Polyglycerinen eines Molekulargewichts bis 2.000, Pentaerythrit, Monosacchariden, Neopentylglykol und $\alpha,\omega$-Diolen mit 3 bis 6 C-Atomen eingesetzt.

Die wasserlöslichen Copolymerisate werden durch Copolymerisieren von Monomerengemischen aus a), b) und gegebenenfalls c) in wäßriger Lösung in Gegenwart von Polymerisationsinitiatoren sowie gegebenenfalls Reglern hergestellt.

Die Summe der Angaben in Mol% der Komponenten a) bis c) beträgt immer 100. Die Copolymerisation wird ausschließlich in wäßrigem, vorzugsweise in rein wäßrigem Medium durchgeführt. Sie kann nach verschiedenen Verfahrensvarianten erfolgen, z.B. kann man die Monomeren in Form wäßriger Lösungen diskontinuierlich in einer Batch-Fahrweise polymerisieren. Außerdem ist es möglich, zunächst einen Teil der Monomeren und einen Teil des Initiators sowie gegebenenfalls den Regler im Polymerisationsreaktor vorzulegen, unter Inertgasatmosphäre auf die Polymerisationstemperatur zu erwärmen und dann die restlichen Monomeren und den Initiator sowie gegebenenfalls weitere Mengen an Regler oder auch die Gesamtmenge an Reglernach Fortschritt der Polymerisation dem Reaktor zuzugeben. Die Polymerisationstemperaturen liegen im Bereich von 20 bis 200°C. Bei Temperaturen oberhalb von 100°C arbeitet man in Druckapparaturen. Vorzugsweise beträgt die Polymerisationstemperatur 40 bis 150°C.

In einer bevorzugten Ausführungsform des Herstellverfahrens wird zunächst das Comonomer b) hergestellt, indem man

b1) Methacrylsäureanhydrid in einem Reaktor vorlegt und darin mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, einwertigen, monoethylenisch ungesättigten $C_3$- bis $C_6$-Akoholen oder deren Mischungen

bei Temperaturen von 50 bis 200°C umsetzt. Diese Umsetzung wird vorzugsweise in Abwesenheit von Wasser vorgenommen. Anstelle der freien ethylenisch ungesättigten Carbonsäuren oder der Anhydride kann man bei der Herstellung der Comonomeren b) auch von den entsprechenden Estern mit einwertigen $C_1$- bis $C_4$-Alkoholen ausgehen. In diesen Fällen wird eine Umesterung durchgeführt und vorzugsweise der dabei entstehende $C_1$- bis $C_4$-Alkohol aus dem Reaktionsgemisch abdestilliert. Gegebenenfalls können dabei übliche Veresterungskatalysatoren mitverwendet werden.

3

Pro Mol der Verbindungen b2) setzt man - sofern es sich dabei um mehrwertige Alkohole handelt - mindestens 2 Mol einer Verbindung der Komponente b1) ein. Die Temperatur bei der Umsetzung beträgt vorzugsweise 50 bis 150°C. Die Reaktion wird soweit geführt, daß praktisch ein quantitativer Umsatz der Komponente b2) gegeben ist. Das Comonomer b) kann in einer monoethylenisch ungesättigten $C_3$- bis $C_6$-Monocarbonsäure gemäß a) gelöst werden und dann zusammen mit den als Lösungsmittel dienenden Monomeren gemäß a) der Copolymerisation unterworfen werden.

Das Comonomer b) kann jedoch auch im Reaktionsansatz, in dem es hergestellt wurde, verbleiben und darin zunächst durch Zugabe von Wasser bzw. verdünnter wäßriger Natronlauge gelöst werden. Diese Lösung wird anschließend durch Zugabe der Comonomeren a) und gegebenenfalls c) copolymerisiert. Die Copolymerisation wird bei einem pH-Wert der wäßrigen Lösung von 2 bis 9, vorzugsweise von 3 bis 7 durchgeführt. Die Monomeren a), die jeweils Carbonsäuregruppen enthalten, können in Form der freien Carbonsäuren oder in neutralisierter, vorzugsweise in partiell neutralisierter Form copolymerisiert werden, wobei der Neutralisationsgrad 0 bis 100, vorzugsweise 10 bis 85 Mol% beträgt. Die Neutralisation erfolgt vorzugsweise mit Alkalimetall- oder Ammoniumbasen. Hierunter sind beispielsweise Natronlauge, Kalilauge, Soda, Pottasche oder Ammoniumbasen wie Ammoniak, $C_1$- bis $C_{18}$-Alkylamine, Dialkylamine, wie Dimethylamin, Di-n-butylamin, Dihexylamin, tertiäre Amine wie Trimethylamin, Triethylamin, Tributylamin, Triethanolamin sowie quaternisierte Stickstoffbasen, z.B. Tetramethylammoniumhydroxid, Trimethyllaurylammoniumhydroxid und Trimethylbenzylammoniumhydroxid zu verstehen. Vorzugsweise verwendet man zum Neutralisieren Natronlauge, Kalilauge oder Ammoniak. Die Neutralisation kann jedoch auch mit Erdalkalimetallbasen, z.B. Ca-Hydroxid oder $MgCO_3$, vorgenommen werden.

Die Copolymerisate können gegebenenfalls als Komponente c) andere, mit a) und b) copolymerisierbare, wasserlösliche monoethylenisch ungesättigte Monomere enthalten. Geeignete Monomere dieser Art sind beispielsweise Acrylamid, Methacrylamid, 2-Acrylamido-2-methylpropansulfonsäure, Vinylsulfonsäure, Allylsulfonsäure, Vinylphosphonsäure, Allylphosphonsäure, Acrylnitril, Methacrylnitril, Dimethylaminoethylacryat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin, Vinylacetat sowie Mischungen der genannten Monomeren. Diejenigen Monomeren dieser Gruppe, die Säuregruppen enthalten, können bei der Copolymerisation in Form der freien Säuregruppen oder auch in partiell oder vollständig mit Alkalimetallbasen oder Ammoniumbasen neutralisierter Form eingesetzt werden. Die basischen Acrylate, wie Diethylaminoethylacrylat, werden mit Säuren neutralisiert bzw. quaternisiert und dann der Copolymerisation unterworfen. Die Monomeren c) dienen lediglich zur Modifizierung der Copolymerisate.

Als Polymerisationsinitiatoren werden vorzugsweise wasserlösliche radikalbildende Verbindungen eingesetzt, z.B. Wasserstoffperoxid, Peroxidisulfate und Mischungen aus Wasserstoffperoxid und Peroxidisulfaten. Geeignete Peroxidisulfate sind beispielsweise Lithium-, Natrium-, Kalium- und Ammoniumperoxidisulfat. Bei Mischungen aus Wasserstoffperoxid und Peroxidisulfat kann jedes beliebige Verhältnis eingestellt werden, vorzugsweise verwendet man Wasserstoffperoxid und Peroxidisulfat im Gewichtsverhältnis 3:1 bis 1:3. Mischungen aus Wasserstoffperoxid und Natriumperoxidisulfat werden vorzugsweise im Gewichtsverhältnis von 1:1 angewendet. Die oben genannten wasserlöslichen Polymerisationsinitiatoren können gegebenenfalls auch in Kombination mit Reduktionsmitteln, z.B. Eisen-II-sulfat, Natriumsulfit, Natriumhydrogensulfit, Natriumdithionit, Triethanolamin und Ascorbinsäure in Form der sogenannten Redox-Initiatoren verwendet werden. Geeignete wasserlösliche organische Peroxide sind beispielsweise Acetylacetonperoxid, Methylethylketonperoxid, tert.-Butylhydroperoxid und Cumolhydroperoxid. Auch die wasserlöslichen organischen Peroxide können mit den oben genannten Reduktionsmitteln eingesetzt werden. Weitere wasserlösliche Polymerisationsinitiatoren sind Azostarter, z.B. 2,2'-Azobis(2-amidinopropan)dihydrochlorid, 2,2'-Azobis-(N,N'-dimethylen)isobutyramidin-dihydrochlorid, 2-(Carbamoylazo)isobutyronitril und 4,4'-Azobis(4-cyanovaleriansäure). Man kann die Polymerisation auch mit wasserunlöslichen Initiatoren, wie Dibenzoylperoxid, Dicyclohexylperoxidicarbonat, Dilaurylperoxid oder Azoisobutyronitril, starten.

Die Initiatoren werden in Mengen von 0,1 bis 10, vorzugsweise 2 bis 7 Gew.%, bezogen auf die Summe der bei der Polymerisation eingesetzten Monomeren, angewendet. Die Polymerisationsinitiatoren können entweder zusammen mit dem Monomeren oder getrennt davon in Form von wäßrigen Lösungen kontinuierlich oder absatzweise der zu polymerisierenden Mischung zugegeben werden.

Die Copolymerisation wird vorzugsweise in Gegenwart von Reglern durchgeführt. Hierfür verwendet man vorzugsweise wasserlösliche Verbindungen, die entweder in jedem Verhältnis mit Wasser mischbar sind oder sich zu mehr als 5 Gew.% darin bei einer Temperatur von 20°C lösen. Verbindungen dieser Art sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen mit bis zu 6 Kohlenstoffatomen, wie Thioglykolsäure, Mercaptoalkohole, wie Mercaptoethanol, Mercaptopropanol, Mercaptobutanole

4

und Mercaptohexanol, ein- und mehrwertige Alkohole mit bis zu 6 C-Atomen, wie Isopropanol, Glykol, Glycerin und Isobutanol. Vorzugsweise in Betracht kommende Regler sind wasserlösliche Mercaptane, Ammoniumformiat und Hydroxylammoniumsulfat. Die Regler werden in Mengen von 0 bis 25 Gew.%, bezogen auf die Summe der bei der Polymerisation eingesetzten Monomeren, verwendet. Die besonders wirksamen Regler, die vorzugsweise in Betracht kommen, werden in Mengen von 2 bis höchstens 15 Gew.% eingesetzt. Sofern in Gegenwart von Reglern gearbeitet wird, beträgt die minimale Einsatzmenge 0,2 Gew.%, bezogen auf die zu polymerisierenden Monomeren.

Besonders bevorzugt ist die Herstellung von Copolymerisaten aus

a) Acrylsäure und/oder Methacrylsäure, und

b) Diacrylaten und/oder Dimethacrylaten von Ethylenglykol, Neopentylglykol, Glycerin, Polyethylenglykol eines Molekulargewichts bis 1500 und Butandiol-1,4.

Bei der Copolymerisation der Monomeren a) und b) werden wäßrige Polymerisatlösungen erhalten, die einen Polymerisatgehalt bis zu 70 Gew.% aufweisen. Es ist selbstverständlich auch möglich, stark verdünnte, z.B. 1 %ige wäßrige Lösungen herzustellen, jedoch wird die Copolymerisation aus wirtschaftlichen Erwägungen so geführt, daß man mindestens 20 gew.%ige wäßrige Copolymerisatlösungen herstellt. Die Lösungen können nach der Copolymerisation auf einen pH-Wert im Bereich von 6,5 bis 7 eingestellt werden, sofern nicht die Polymerisation ohnehin in diesem Bereich durchgeführt wurde. Die Copolymerisate können durch Eindampfen der wäßrigen Lösungen gewonnen werden. Sie haben einen niedrigen Restmonomerengehalt und sind überraschenderweise biologisch abbaubar. Die biologische Abbaubarkeit der erfindungsgemäßen Copolymerisate beträgt nach DIN 38 412, Teil 24, Statischer Test (L25) bis zu 100 % und liegt in der Regel zwischen 20 und 95 %. Der K-Wert der Copolymerisate (bestimmt nach H. Fikentscher) beträgt vorzugsweise 20 bis 80.

Die Copolymerisate sind wasserlöslich. Falls sie sich in der freien Säureform nicht in Wasser lösen, so gelingt es, sie durch partielle oder vollständige Neutralisation mit NaOH, KOH, Ammoniak oder Aminen in eine wasserlösliche Form zu überführen. Copolymerisate, deren Alkali- oder Ammoniumsalze, von denen sich mindestens 20 g pro Liter Wasser bei einer Temperatur von 20°C lösen, werden im vorliegenden Zusammenhang als wasserlöslich bezeichnet. Die Copolymerisate haben überraschenderweise den Vorteil, daß sie im Bereich geringer Polymerkonzentrationen keine Ausfällungen in Ca- und/oder Mg-Ionen enthaltenden wäßrigen Lösungen zeigen. Daher kann man stabile Lösungen der Copolymerisate in Trinkwasser herstellen, ohne daß es zu Ausfällungen der Erdalkalisalze der Copolymerisate kommt.

Die Copolymerisate enthalten Polymersegmente aus Einheiten der Monomeren a) und gegebenenfalls c) mit einem Molekulargewicht (Gewichtsmittel) bis zu 15 000, vorzugsweise 300 bis 8 000. Diese Polymersegmente können analytisch z.B. dadurch nachgewiesen werden, daß man die Copolymerisate einer vier- bis sechsstündigen Hydrolyse im alkalischen pH-Bereich, z.B. bei pH-Werten von 9 bis 14 und Temperaturen bis zu 100°C in wäßrigem Medium unterwirft. Nach der Hydrolyse werden die Reaktionsprodukte durch Zugabe von organischen, mit Wasser mischbaren Lösemitteln, wie Methanol, Aceton, Isopropanol oder Mischungen aus Methanol und Aceton aus der wäßrigen Lösung gefällt. Das ausgefällte Produkt wird mit einem Lösemittel (Methanol oder Aceton) nachgewaschen und anschließend getrocknet. Die Bestimmung der molaren Massen der Hydrolyseprodukte erfolgte durch Gel-Permeations-Chromatographie (= GPC) mit wäßrigen Elutionsmitteln. Die Eichung der Trennsäulen erfolgte mit eng verteilten Polystyrolsulfonaten der Fa. Pressure Chem. Comp. und Umrechnung auf die molaren Masseneinheiten von Na-Polyacrylat nach dem universellen Eichprinzip von BENOIT (J. Chim. Phys. 63 (19669) 1507) unter Verwendung der Meßdaten von Spatorico und Beyer J. Appl. Polym. Sci. 19 (1975) 2933).

Die Copolymerisate werden als Beschichtungsmittel für Saatgut verwendet. Mit Hilfe der Saatgutbeschichtung - hier können sämtliche Getreidearten, wie Weizen, Roggen, Hafer und Gerste sowie Mais und Lupinen sowie andere Saatgüter mit einem Polymerfilm umhüllt werden - wird ein schnelleres Keimen des Saatguts gegenüber dem nichtbeschichteten Saatgut nach der Aussaaterreicht. Pro 100 kg Saatgut verwendet man 0,1 bis 1 kg, vorzugsweise 0,15 bis 0,25 kg, der Copolymerisate. Die Copolymerisate werden vorzugsweise in Form einer verdünnten wäßrigen Lösung auf das Saatgut gesprüht und bilden dort einen schützenden Polymerfilm. In den Polymerfilm können feinteilige, inerte Füllstoffe, z.B. Graphit, Quarz, Talkum oder Bentonit einer Teilchengröße von 20 bis 500 $\mu$m eingelagert sein. Die Füllstoffe werden vorzugsweise zusammen mit der Polymerlösung auf das zu beschichtende Material aufgetragen.

Die in den Beispielen angegebenen K-Werte wurden nach H. Fikentscher, Cellulosechemie, Band 13, 58-64 und 71-74 (1932) bestimmt, dabei bedeutet K = k$\cdot$10$^3$. Die Messungen wurden am Natriumsalz in wäßriger Lösung bei 25°C, einem pH-Wert von 7 und einer Polymerkonzentration des Na-Salzes von 1 Gew.% vorgenommen. Sofern erfindungsgemäße Copolymerisate in Form anderer Salze oder der freien Säuren anfallen, müssen sie vor der Bestimmung des K-Wertes zunächst in die Natriumsalze umgewandelt werden. Die in den Beispielen angegebenen Molekulargewichte beziehen sich auf das Zahlenmittel des

5

Molekulargewichts. Die Daten zur biologischen Abbaubarkeit wurden nach DIN 38 412, Teil 24, Statischer Test (L25), bestimmt.

Beispiele

Allgemeine Herstellungsvorschrift I

In einem mit Rührer, Thermometer, 3 Zulaufgefäßen und Inertgaszuleitung versehenen 2 l Glasreaktor werden 300 ml vollentsalztes Wasser bei 95 bis 100°C vorgelegt und gleichbeginnend über einen Zeitraum von 4 h 0,02 bis 0,08 Mol Monomer b) gelöst in 1,38 Mol Monomer a), 10 Gewichtsteile Regler in 50 ml Wasser und über einen Zeitraum von 4,5 h 2 Gewichtsteile Natriumperoxodisulfat, gelöst in 50 ml Wasser zudosiert. Anschließend wird das Reaktionsgemisch auf 80°C abgekühlt, mit 0,2 Gewichtsteilen 2,2′-Azobis-(2-amidinopropan)dihydrochlorid versetzt und 1 h nachpolymerisiert. Nach Abkühlen neutralisiert man mit 50 % Natronlauge, bis ein pH von 6,5 erreicht ist.

Allgemeine Herstellungsvorschrift II

In einem mit Rührer, Thermometer, 3 Zulaufgefäßen und Inertgaszuleitung versehenen 2 l Glasreaktor werden 100 ml vollentsalztes Wasser bei 80°C vorgelegt und gleichbeginnend über einen Zeitraum von 4 h eine Lösung von 1,38 Mol des Natriumsalzes des Monomeren a) in 200 ml vollentsalztem Wasser, 0,02 bis 0,08 Mol Monomer b) gelöst in 6 bis 10 Gewichtsteilen Regler sowie über einen Zeitraum von 5 h 2 Gewichtsteile 2,2′-Azobis(2-amidinopropan)dihydrochlorid in 50 ml Wasser zudosiert. Im Anschluß wird weitere 2 h bei 80°C nachpolymerisiert. Nach dem Abkühlen neutralisiert man mit 50 % Natronlauge, bis ein pH von 6,5 erreicht ist.

Allgemeine Herstellungsvorschrift III

In einem mit Rührer, Thermometer, 4 Zulaufgefäßen und Inertgaszuleitung versehenen 2 l Glasreaktor werden 100 ml vollentsalztes Wasser bei 80°C vorgelegt und gleichbeginnend über einen Zeitraum von 4 h eine Lösung von 0,03 bis 0,08 Mol Monomer b) in 1,38 Mol Monomer bzw. Monomermischung a), 6 bis 10 Gewichtsteile Regler, gelöst in 50 ml Wasser, 0,69 bis 1,38 Mol Natriumhydroxid, 25 % in Wasser, sowie über einen Zeitraum von 5 h 2 Gewichtsteile 2,2′-Azobis(2-amidinopropan)dihydrochlorid, gelöst in 50 ml Wasser zudosiert. Im Anschluß wird weitere 2 h bei 80°C nachpolymerisiert und mit 50 % NaOH auf einen pH-Wert von 6,5 eingestellt.

Tabelle 1: Beispiele nach Vorschrift I

| Beispiel Nr. | Monomer a) [Mol.%] | Monomer b) [Mol.%] | Regler [Gew.%] | | K-Wert | biologischer Abbau [%] |
|---|---|---|---|---|---|---|
| 1 | AS 97,1 | PEG$_{400}$-diacrylat [1] 2,9 | ME | 10 | 28,2 | 89 |
| 2 | AS 95,8 | Ethylenglykol-di-acrylat 4,2 | ME | 10 | 38,7 | 68 |
| 3 | AS 94,7 | Butandiol-dimeth-acrylat 5,3 | TGS | 10 | 31,0 | 61 |
| 4 | AS 94,7 | Tripropylenoxid-di-acrylat 5,3 | TGS | 10 | 25,4 | 52 |
| 5 | AS 98,5 | PEG$_{1500}$-diacrylat 1,5 | TGS | 10 | 47,2 | 91 |
| 6 | AS 94,7 | Neopentylglykol-di-acrylat 5,3 | TGS | 10 | 28,7 | 67 |

7

Tabelle 2: Beispiele nach Vorschrift II

| Beispiel Nr. | Monomer a) [Mol.%] | Monomer b) [Mol.%] | Regler [Gew.%] | | K-Wert | biologi- scher Abbau [%] |
|---|---|---|---|---|---|---|
| 7 | AS 95,8 | PEG$_{1500}$-diacrylat 4,2 | ME | 6 | 20,9 | 94 |
| 8 | AS 97,9 | PEG$_{1500}$-diacrylat 2,1 | BA | 10 | 65,0 | 63 |
| 9 | AS 94,7 | Tetraethylenoxid-di- methacrylat 5,3 | ME | 10 | 28,1 | 53 |
| 10 | AS 95,8 | Ethylenglykol-di- acrylat 4,2 | ME | 10 | 23,1 | 66 |
| 11 | AS 95,8 | Tripropylenoxid-di- acrylat 4,2 | ME | 10 | 37,1 | 52 |

Abkürzungen:

PEG$_{400}$ = Polyethylenglykol eines Molekulargewichts von 400

PEG$_{400}$-diacrylat = Diacrylat von Polyethylenglykol eines Molekulargewichts von 400

AS = Acrylsäure

MAS = Methacrylsäure

ME = Mercaptoethanol

TGS = Thioglykolsäure

BA = Butyraldehyd

AF = Ammoniumformiat

8

Tabelle 3: Beispiele nach Vorschrift III

| Beispiel Nr. | Monomer a) [Mol.%] | Monomer b) [Mol.%] | Regler [Gew.%] | K-Wert | Restgehalt Monomer a) [%] | biologischer Abbau [%] |
|---|---|---|---|---|---|---|
| 12 | AS 95,8 | PEG1500-diacrylat 4,2 | ME 6 | 31,8 | 0,23 | 93 |
| 13 | AS 95,8 | Ethylenglykol-di-acrylat 4,2 | ME 10 | 22,4 | 0,37 | 69 |
| 14 | AS 96,9 | PEG400-diacrylat 3,1 | ME 10 | 44,7 | 0,22 | 72 |
| 15 | AS/MAS 85,8/10,5 | Triethylenoxid-di-acrylat 3,7 | ME 10 | 31,5 | 0,31 | 61 |
| 16 | AS 94,7 | Ethylenglykol-di-acrylat 5,3 | AF 10 | 41,9 | 0,27 | 67 |
| 17 | AS 94,4 | Pentaerythrit-tri-acrylat 5,6 | AF 10 | 22,0 | 0,29 | 70 |
| 18 | AS 94,7 | Butandiol-1,4-dimeth-acrylat 5,3 | AF 10 | 22,4 | 0,25 | 54 |
| 19 | AS 94,7 | Thiodiethylenglykol-diacrylat 5,3 | AF 10 | 25,7 | 0,26 | 68 |
| 20 | AS 95,8 | Tripropylenoxid-di-acrylat 4,2 | ME 10 | 55,4 | 0,41 | 47 |

Die biologische Abbaubarkeit der Copolymerisate wurde zusätzlich durch Bakterienwachstumsversuche nachgewiesen. Hierfür wurde auf festen Nährböden ein Anreicherungsmedium hergestellt und mit 18 g/l Agar verfestigt. Das Anreicherungsmedium hatte folgende Zusammensetzung:

| | |
|---|---|
| Dinatriumhydrogenphosphat mit 2 Wasser | 7 g/l |
| Kaliumdihydrogenphosphat | 3 g/l |
| Natriumchlorid | 0,5 g/l |
| Ammoniumchlorid | 1,0 g/l |
| Lösung von Spurenelementen | 2,5 ml/l pH 7,0 |

(hergestellt nach T. Bauchop und S.R. Elsden, J. gen. Mikrobiol. Band 23, 457-469 (1960)).

Die in Tabelle 1 unter Nr. 1, 2 und 5 beschriebenen Copolymerisate wurden den Nährmedien jeweils in Konzentrationen von 10 g/l zugegeben.

Erdproben wurden entweder in Flüssigmedium gegeben und dort 7 Tage bei 30°C geschüttelt, oder als wäßrige Suspension direkt auf feste Nährböden gebracht und ebenfalls bei 30°C inkubiert. Die Anreicherungskulturen in Flüssigmedium wurden nach 7 Tagen auf feste Nährböden übertragen. Von diesen Platten wurden gut wachsende Kolonien abgeimpft und im Vereinzelungsausstrich auf Einheitlichkeit geprüft.

Auf diese Weise wurden Bakterienreinkulturen isoliert, die auf den untersuchten Copolymerisaten eindeutig Wachstum zeigten.

Wurden dagegen die oben beschriebenen Bakterienwachstumsversuche zum Vergleich mit einem Copolymerisat aus 30 Gew.% Maleinsäure und 70 Gew.% Acrylsäure vom K-Wert 60 durchgeführt, so konnte kein Bakterienwachstum nachgewiesen werden.

Für die unter Nr. 1, 2 und 5 in Tabelle 1 angegebenen Copolymerisate wurde das Ausfällverhalten bei pH 7,5 in wäßrigen Lösungen geprüft, die 10 bis 10 000 mg/l Ca-Ionen (in Form von $CaCl_2$) enthielten. Folgende Ca-Ionenkonzentrationen wurden eingesetzt: 10, 50, 75, 100, 150, 500, 1000 und 10 000 mg/l. Die Copolymerisatkonzentrationen wurden von 0,1 bis 7 mg/l variiert (geprüft wurden folgende Konzentrationen: 0,1; 0,5; 1,0; 2; 3; 4 und 7 mg Copolymerisat/l Wasser). Dabei traten selbst nach 20-tägiger Lagerung der wäßrigen Lösungen der Copolymerisate in Gegenwart von Ca-Ionen keine Ausfällungen auf, während ein Copolymerisat aus 30 Gew.% Maleinsäure und 70 Gew.% Acrylsäure vom K-Wert 60 unter den angegebenen Prüfbedingungen immer ausfiel.

Allgemeine Herstellvorschrift IV

In einem 2 l fassenden Glasreaktor, der mit Rührer, Thermometer, Kühler, Stickstoffeinleitung und drei Zulaufgefäßen ausgestattet ist, von denen ein Zulaufgefäß beheizbar und rührbar ist, werden 150 ml Wasser vorgelegt und unter Stickstoffspülung auf 80°C erwärmt. Gleichzeitig werden in dem beheizbaren Zulaufgefäß 0,125 Mol (19,25 g) Methacrylsäureanhydrid und 0,0626 Mol des in der Tabelle 4 genannten Diols unter Zusatz von 0,1 g p-Toluolsulfonsäure bei 100°C bis zur vollständigen Veresterung (Dauer ca. 2 Stunden) gerührt und nach dem Abkühlen auf 30°C mit 2,875 Mol (247 g) Methacrylsäure und 320 g 25 %iger wäßriger Natronlauge versetzt.

Zur Polymerisation gibt man dann über einen Zeitraum von 4 Stunden die oben bereitete Lösung und die in Tabelle 4 angegebenen Mengen an Regler (diese sind bezogen auf die Gesamtmonomermenge in Gew.%) gelöst in 150 ml Wasser und gleichbeginnend über einen Zeitraum von 5 Stunden die ebenfalls in der Tabelle angegebenen Mengen an Starter gelöst in 150 ml Wasser. Die angegebene Startermenge bezieht sich auf das Gewicht der gesamten Monomeren. Die viskose Lösung wird 1 Stunde nach Beendigung der Initiatorzugabe bei 90°C nachpolymerisiert und nach dem Abkühlen auf 25°C mit 25 %iger wäßriger Natronlauge auf einen pH-Wert von 6,5 eingestellt. In der Tabelle 4 sind die Versuchsergebnisse zusammengefaßt.

Tabelle 4: Beispiele nach Vorschrift IV

| Beispiel Nr. | Diol | Vernetzer [Mol.%] | MAS [Mol.%] | Regler [Gew.%] | Initiator [Gew.%] | K-Wert | Restmono. % | biologischer Abbau [%] |
|---|---|---|---|---|---|---|---|---|
| 21 | Ethylenglykol | 2 | 98 | 5-Hydroxylammonium-sulfat | 5 $H_2O_2$ | 30,2 | 0,21 | 66 |
| 22 | Neopentylglykol | 2 | 98 | 5-Hydroxylammonium-sulfat | 5 $H_2O_2$ | 33,7 | 0,19 | 69 |
| 23 | PEG400 | 2 | 98 | | 5 $H_2O_2$ | 46,3 | 0,23 | 74 |
| 24 | Diethylenglykol | 2 | 98 | | 2,5 $H_2O_2$ | 50,2 | 0,28 | 71 |
| 25 | Ethylenglykol | 2 | 98 | 2,5-Hydroxylammonium-sulfat | 2,5 $H_2O_2$ | 44,3 | 0,21 | 53 |
| 26 | Neopentylglykol | 2 | 98 | 2,5-Hydroxylammonium-sulfat | 2,5 $H_2O_2$ | 50,1 | 0,17 | 57 |
| 27 | Diethylenglykol | 2 | 98 | 2,5-Mercaptethanol | 2,5 $H_2O_2$ | 42,3 | 0,31 | 63 |
| 28 | PEG400 | 2 | 98 | | 2,5 $H_2O_2$ | 54,3 | 0,26 | 67 |

Patentansprüche

1. Wasserlösliche Copolymerisate auf Basis von monoethylenisch ungesättigten Carbonsäuren mit 3 bis 6 C-Atomen, dadurch gekennzeichnet, daß die Copolymerisate einen K-Wert von 15 bis 120 (bestimmt am Natriumsalz nach H. Fikentscher in wäßriger Lösung bei 25°C, einem pH-Wert von 7 und einer Polymerkonzentration des Na-Salzes von 1 Gew.%) haben und

a) 99,5 bis 80 Mol% wenigstens einer monoethylenisch ungesättigten $C_3$- bis $C_6$-Monocarbonsäure und

b) 0,5 bis 20 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

b1) monoethylenisch ungesättigten $C_3$- bis $C_6$-Monocarbonsäuren mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen und gegebenenfalls

c) anderen, mit a) und b) copolymerisierbaren, wasserlöslichen, monoethylenisch ungesättigten Monomeren

mit der Maßgabe einpolymerisiert enthalten, daß die Summe der Angaben in Mol.% a) bis c) immer 100 beträgt und daß die über Einheiten von b) miteinander verknüpften Polymersegmente aus Einheiten der Monomeren a) und c) Polymersegmente mit einem Molekulargewicht (Gewichtsmittel) von höchstens 15 000 darstellen.

**2.** Wasserlösliche Copolymerisate nach Anspruch 1, dadurch gekennzeichnet, daß das einpolymerisierte Comonomer (b) erhältlich ist durch Umsetzung von

b1) Acrylsäure, Methacrylsäure, Crotonsäure, Vinylessigsäure, Methacrylsäureanhydrid oder deren Gemischen mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, Allylalkohol, oder deren Mischungen.

**3.** Wasserlösliche Copolymerisate nach den Ansprüchen 1 oder 2, dadurch gekennzeichnet, daß die über Einheiten von b) verknüpften Polymersegmete aus Einheiten der Monomeren a) Polymersegmete mit einem Molekulargewicht (Gewichtsmittel) von 300 bis 8 000 darstellen.

**4.** Verfahren zur Herstellung von wasserlöslichen Copolymerisaten nach einem der Ansprüche 1 bis 3, dadurch gekennzeichnet, daß man Monomerengemische aus

a) 99,5 bis 80 Mol% wenigstens einer monoethylenisch ungesättigten $C_3$- bis $C_6$-Monocarbonsäure mit

b) 0,5 bis 20 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

(b1) monoethylenisch ungesättigten $C_3$- bis $C_6$-Monocarbonsäuren mit

(b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen und gegebenenfalls

c) anderen, mit a) und b) copolymerisierbaren, wasserlöslichen, monoethylenisch ungesättigten Monomeren

in wäßriger Lösung in Gegenwart von Polymerisationsinitiatoren und gegebenenfalls Reglern copolymerisiert, wobei die Summe der Angaben in Mol% a) bis c) immer 100 beträgt.

**5.** Verfahren nach Anspruch 4, dadurch gekennzeichnet, daß man zunächst das Comonomer (b) herstellt durch Umsetzung von

b1) Methacrylsäureanhydrid mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, Allylalkohol, Buten-2-diol-1,4 oder deren

12

EP 0 289 827 B1

Mischungen
bei Temperaturen von 50 bis 200°C und es dann in wäßriger Lösung mit den Monomeren a) und gegebenenfalls c) bei Temperaturen bis 200°C copolymerisiert.

6. Verfahren nach Anspruch 4 oder 5, dadurch gekennzeichnet, daß das Comonomer (b) in einer monoethylenisch ungesättigten Carbonsäure gemäß (a) oder einer gegebenenfalls teilweise oder vollständig neutralisierten wäßrigen Lösung derselben gelöst und in Form dieser Lösung der Copolymerisation unterworfen wird.

7. Verfahren nach mindestens einem der Ansprüche 4 bis 6, dadurch gekennzeichnet, daß man Monomerengemische aus
   a) Acrylsäure und/oder Methacrylsäure und
   b) einem Comonomer aus b1) Acrylsäure oder Methacrylsäure und b2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol,
   der Copolymerisation unterwirft.

8. Verfahren nach mindestens einem der Ansprüche 4 bis 7, dadurch gekennzeichnet, daß der pH-Wert der wäßrigen Lösung während der Copolymerisation 2 bis 9 beträgt und die Copolymerisation in Gegenwart von 0,2 bis 25 Gew.%, bezogen auf die eingesetzten Monomeren, eines Polymerisationsreglers durchgeführt wird.

9. Verfahren nach mindestens einem der Ansprüche 4 bis 8, dadurch gekennzeichnet, daß die Monomeren a) in ganz oder partiell mit Alkalimetall- oder Ammoniumbasen neutralisierter Form copolymerisiert werden.

10. Verfahren nach Anspruch 9, dadurch gekennzeichnet, daß die Monomeren a) partiell neutralisiert sind, wobei der Neutralisationsgrad 10 bis 85 Mol% beträgt.

11. Verwendung der wasserlöslichen Copolymerisate nach Anspruch 1 als Beschichtungsmittel für Saatgut.

**Claims**

1. A water-soluble copolymer based on monoethylenically unsaturated carboxylic acids of 3 to 6 carbon atoms, wherein the copolymer has a K value of from 15 to 120 (determined on the sodium salt according to H. Fikentscher in aqueous solution at 25°C, a pH of 7 and a polymer concentration of the Na salt of 1% by weight) and contains, as copolymerized units,
   a) from 99.5 to 80 mol % of one or more monoethylenically unsaturated $C_3$-$C_6$-monocarboxylic acids and
   b) from 0.5 to 20 mol % of one or more comonomers which possess two or more ethylenically unsaturated, non-conjugated double bonds, are derived from esters and are obtainable by esterification of
      b1) monoethylenically unsaturated $C_3$-$C_6$-monocarboxylic acids with
      b2) polyhydric alcohols of 2 to 6 carbon atoms, water-soluble or water-insoluble polyalkylene glycols having a molecular weight up to about 400, water-soluble polyalkylene glycols having a molecular weight from above about 400 to 10,000, polyglycerols having a molecular weight of up to 2,000, polyvinyl alcohol having a molecular weight of up to 10,000 and monohydric, monoethylenically unsaturated $C_3$-$C_6$-alcohols and, if desired,
      c) other water-soluble, monoethylenically unsaturated monomers which are copolymerizable with a) and b),
   with the proviso that the sum of the mol % data a) to c) is always 100 and the polymer segments consisting of units of monomers a) and c) and bonded to one another via units of b) are polymer segments having a weight average molecular weight of not more than 15,000.

2. A water-soluble copolymer as claimed in claim 1, wherein the copolymerized comonomer (b) is obtainable by reacting
   b1) acrylic acid, methacrylic acid, crotonic acid, vinylacetic acid, methacrylic anhydride or a mixture of these with

13

b2) polyhydric alcohols of 2 to 6 carbon atoms, water-soluble or water-insoluble polyalkylene glycols having a molecular weight of up to about 400, water-soluble polyalkylene glycols having a molecular weight from above about 400 to 10,000, polyglycerols having a molecular weight of up to 2,000, polyvinyl alcohol having a molecular weight of up to 10,000, allyl alcohol or a mixture of these.

3. A water-soluble copolymer as claimed in claim 1 or 2, wherein the polymer segments consisting of units of the monomers a) and bonded via units of b) are polymer segments having a weight average molecular weight of from 300 to 8,000.

4. A process for the preparation of a water-soluble copolymer as claimed in any of claims 1 to 3, wherein a monomer mixture of
   a) 99.5 to 80 mol % of one or more monoethylenically unsaturated $C_3$-$C_6$-monocarboxylic acids with
   b) from 0.5 to 20 mol % of one or more comonomers which possess two or more ethylenically unsaturated non-conjugated double bonds, are derived from esters and are obtainable by esterification of
      b1) monoethylenically unsaturated $C_3$-$C_6$-monocarboxylic acids with
      b2) polyhydric alcohols of 2 to 6 carbon atoms, water-soluble or water-insoluble polyalkylene glycols having a molecular weight of up to about 400, water-soluble polyalkylene glycols having a molecular weight from above about 400 to 10,000, polyglycerols having a molecular weight of up to 2,000, polyvinyl alcohol having a molecular weight of up to 10,000 and monohydric, monoethylenically unsaturated $C_3$-$C_6$-alcohols and, if desired,
   c) other water-soluble, monoethylenically unsaturated monomers which are copolymerizable with a) and b),
   is copolymerized in aqueous solution in the presence of a polymerization initiator and, if required, a regulator, the sum of the mol % data a) to c) always being 100.

5. A process as claimed in claim 4, wherein first the comonomer (b) is prepared by reacting
   b1) methacrylic anhydride with
   b2) polyhydric alcohols of 2 to 6 carbon atoms, water-soluble or water-insoluble polyalkylene glycols having a molecular weight of up to about 400, water-soluble polyalkylene glycols having a molecular weight of from above about 400 to 10,000, polyglycerols having a molecular weight of up to 2,000, polyvinyl alcohol having a molecular weight of up to 10,000, allyl alcohol, but-2-ene-1,4-diol or a mixture of these,
   at from 50 to 200°C, and is then copolymerized in aqueous solution with the monomers a) and, if required, c) at not more than 200°C.

6. A process as claimed in claim 4 or 5, wherein the comonomer b) is dissolved in a monoethylenically unsaturated carboxylic acid (a) or a partially or completely neutralized aqueous solution of the said carboxylic acid, and is subjected to the copolymerization in the form of this solution.

7. A process as claimed in one or more of claims 4 to 6, wherein a monomer mixture of
   a) acrylic acid and/or methacrylic acid and
   b) a comonomer of b1) acrylic acid or methacrylic acid and b2) ethylene glycol, polyethylene glycol having a molecular weight of up to 2,000, glycerol, polyglycerols having a molecular weight of up to 2,000, pentaerythritol, monosaccharides or neopentylglycol
   is subjected to copolymerization.

8. A process as claimed in one or more of claims 4 to 7, wherein the pH of the aqueous solution during the copolymerization is from 2 to 9, and the copolymerization is carried out in the presence of from 0.2 to 25% by weight, based on the monomers used, of a polymerization regulator.

9. A process as claimed in one or more of claims 4 to 8, wherein the monomers a) are copolymerized in a form completely or partially neutralized with an alkali metal or ammonium base.

10. A process as claimed in claim 9, wherein the monomers a) are partially neutralized, the degree of neutralization being from 10 to 85 mol %.

11. Use of a water-soluble copolymer as claimed in claim 1 as a coating agent for seed.

**Revendications**

1. Copolymères solubles dans l'eau, à base d'acides carboxyliques à insaturation monoéthylénique comportant de 3 à 6 atomes de carbone, caractérisés en ce que ces copolymères possèdent une valeur K de 15 à 120 (comme déterminée sur le sel de sodium, selon H. Fikentscher, en solution aqueuse, à 25°C, une valeur de pH de 7 et une concentration en polymère du sel de sodium de 1% en poids) et en ce qu'ils contiennent, incorporés par polymérisation,

   a) 99,5 à 80% molaires d'au moins un acide monocarboxylique en $C_3$ à $C_6$, à insaturation monoéthylénique et

   b) 0,5 à 20% molaires d'au moins un comonomère présentant au moins deux doubles liaisons éthyléniquement insaturées, non conjuguées, qui dérive d'esters que l'on peut obtenir par l'estérification

      b1) d'acides monocarboxyliques en $C_3$ à $C_6$, à insaturation monoéthylénique, avec

      b2) des alcools polyhydroxylés, présentant de 2 à 6 atomes de carbone, des polyalkylèneglycols solubles dans l'eau ou insolubles dans l'eau, d'un poids moléculaire allant jusqu'à 400, des polyalkylèneglycols solubles dans l'eau, d'un poids moléculaire supérieur à environ 400 et allant jusqu'à 10.000, des polyglycérines d'un poids moléculaire allant jusqu'à 2.000, l'alcool polyvinylique d'un poids moléculaire allant jusqu'à 10.000 et des alcools en $C_3$ à $C_6$, à insaturation monoéthylénique, monohydroxylés et, éventuellement,

   c) d'autres monomères à insaturation monoéthylénique, solubles dans l'eau, copolymérisables avec a) et b),

   avec la condition que la somme des indications en pourcentages molaires a) à c) soit toujours égale à 100 et en ce que les segments polymériques d'unités des monomères a) et c), mutuellement liés par des unités b), constituent des segments polymériques d'un poids moléculaire (moyenne en poids) d'au maximum 15.000.

2. Copolymères solubles dans l'eau selon la revendication 1, caractérisés en ce que l'on peut obtenir le comonomère (b) incorporé par polymérisation par la réaction

      b1) d'acide acrylique, d'acide méthacrylique, d'acide crotonique, d'acide vinylacétique, d'anhydride méthacrylique, ou de leurs mélanges, avec

      b2) des alcools polyhydroxylés, présentant de 2 à 6 atomes de carbone, des polyalkylèneglycols solubles dans l'eau ou insolubles dans l'eau, d'un poids moléculaire allant jusqu'à environ 400, des polyalkylèneglycols solubles dans l'eau, d'un poids moléculaire supérieur à environ 400 et allant jusqu'à 10.000, des polyglycérines d'un poids moléculaire allant jusqu'à 2.000, l'alcool polyvinylique d'un poids moléculaire allant jusqu'à 10.000, l'alcool allylique, ou leurs mélanges.

3. Copolymères solubles dans l'eau selon la revendication 1 ou 2, caractérisés en ce que les segments polymériques d'unités des monomères a), liés par des unités de b), constituent des segments polymériques d'un poids moléculaire (moyenne en poids) de 300 à 8.000.

4. Procédé de préparation de copolymères solubles dans l'eau selon l'une quelconque des revendications 1 à 3, caractérisé en ce que l'on copolymérise des mélanges de monomères constitués

   a) de 99,5 à 80% molaires d'au moins un acide monocarboxylique en $C_3$ à $C_6$, à insaturation monoéthylénique et

   b) de 0,5 à 20% molaires d'au moins un comonomère présentant des doubles liaisons éthyléniquement insaturées, non conjuguées, qui dérive d'esters que l'on peut obtenir par l'estérification

      b1) d'acides monocarboxyliques en $C_3$ à $C_6$, à insaturation monoéthylénique, avec

      b2) des alcools polyhydroxylés, présentant de 2 à 6 atomes de carbone, des polyalkylèneglycols solubles dans l'eau ou insolubles dans l'eau, d'un poids moléculaire allant jusqu'à 400, des polyalkylèneglycols solubles dans l'eau, d'un poids moléculaire supérieur à environ 400 et allant jusqu'à 10.000, des polyglycérines d'un poids moléculaire allant jusqu'à 2.000, l'alcool polyvinylique d'un poids moléculaire allant jusqu'à 10.000 et des alcools en $C_3$ à $C_6$, à insaturation monoéthylénique, monohydroxylés et, éventuellement,

   c) d'autres monomères à insaturation monoéthylénique, solubles dans l'eau, copolymérisables avec a) et b),

   en solution aqueuse, en présence d'amorceurs de polymérisation et éventuellement de régulateurs de polymérisation, la somme des indications en pourcentages molaires de a) à c) étant toujours égale à 100.

**5.** Procédé suivant la revendication 4, caractérisé en ce que l'on prépare d'abord le comonomère b) par la réaction

b1) de l'anhydride méthacrylique avec

b2) des alcools polyhydroxylés, présentant de 2 à 6 atomes de carbone, des polyalkylèneglycols solubles dans l'eau ou insolubles dans l'eau, d'un poids moléculaire allant jusqu'à environ 400, des polyalkylèneglycols solubles dans l'eau, d'un poids moléculaire supérieur à environ 400 et allant jusqu'à 10.000, des polyglycérines d'un poids moléculaire allant jusqu'à 2.000, l'alcool polyvinylique d'un poids moléculaire allant jusqu'à 10.000, l'alcool allylique, le butène-2-diol-1,4, ou leurs mélanges,

à des températures de 50 à 200°C et en ce qu'on le copolymérise ensuite à des températures allant jusqu'à 200°C, en solution aqueuse, avec les monomères a) et éventuellement c).

**6.** Procédé suivant la revendication 4 ou 5, caractérisé en ce que l'on dissout le comonomère (b) dans un acide carboxylique à insaturation monoéthylénique selon (a), ou dans une solution aqueuse de cet acide carboxylique à insaturation monoéthylénique, éventuellement totalement ou partiellement neutralisée et on le soumet à la copolymérisation sous forme de cette solution.

**7.** Procédé suivant au moins l'une des revendications 4 à 6, caractérisé en ce que l'on soumet des mélanges de monomères, constitués

a) d'acide acrylique et/ou d'acide méthacrylique et

b) d'un comonomère constitué b1) d'acide acrylique ou d'acide méthacrylique et b2) d'éthylèneglycol, de polyéthylèneglycol d'un poids moléculaire allant jusqu'à 2.000, de glycérine, de polyglycérines d'un poids moléculaire allant jusqu'à 2.000, de pentaérythrite, de monosaccharides, de néopentylglycol,

à la copolymérisation.

**8.** Procédé suivant au moins l'une des revendications 4 à 7, caractérisé en ce que la valeur du pH de la solution aqueuse varie de 2 à 9 au cours de la copolymérisation et on entreprend la copolymérisation en présence de 0,2 à 25% en poids, par rapport aux monomères mis en oeuvre, d'un régulateur de polymérisation.

**9.** Procédé suivant au moins l'une des revendications 4 à 8, caractérisé en ce que l'on copolymérise les monomères a) sous forme totalement ou partiellement neutralisée avec des bases de métaux alcalins ou d'ammonium.

**10.** Procédé suivant la revendication 9, caractérisé en ce que les monomères a) sont partiellement neutralisés et leur degré de neutralisation atteint 10 à 85% molaires.

**11.** Utilisation des copolymères solubles dans l'eau suivant la revendication 1, à titre d'agent de revêtement pour des semences ou graines.